# EUROPÄISCHE PATENTANMELDUNG

(11) **EP 2 753 001 A1**
(43) Veröffentlichungstag der Anmeldung: **09.07.2014**
(21) Anmeldenummer: 13400001.7
(22) Anmeldetag: 08.01.2013
(51) Int. Cl.: H04B 5/00, H04B 5/02

(54) **Kabelförmige Anordnung mit mikroelektronischen Bauteilen**

(71) Anmelder: Ingenieurbuero consult+control Dr. -Ing. J. Westhaeusler, 01324 Dresden (DE)
(72) Erfinder: Westhäusler, Jürgen, Dr., 01324 Dresden-Bühlau (DE)

(57) **Zusammenfassung**

Die Erfindung beschreibt eine kabelförmig gestaltete Anordnung (1) von elektrischen Leitungen mit einer Anzahl linienförmig im Leitungsverlauf integrierter freiprogrammierbarer mikroelektronischer Bauteile (2) mit Sende- und Empfangsfunktionen und Koppleranschlüssen (6) zum vorzugsweisen Einsatz in WPAN (Wireless Personal Area Network) Anwendungen speziell dabei auch in Applikationen mit dem Bluetooth Low Energy (BLE) Standard zur vorzugsweisen Verlegung in industriell und öffentlich genutzten Gebäuden und Fahrzeugen zur Personenbeförderung für eine drahtgebundene Kommunikation zu peripheren Geräten (9) und für eine drahtlose Kommunikation mit mobilen WPAN-Komponenten (10) angebracht an technischen Einrichtungen, Fahrzeugen und Personen, die sich in anwendungsgerechter Reichweite zu diesen mikroelektronischen Bauteilen (2) bewegen.

## Beschreibung

Die Erfindung beschreibt eine kabelförmig gestaltete Anordnung von elektrischen Leitungen mit einer Anzahl im Leitungsverlauf integrierter freiprogrammierbarer mikroelektronischer Bauteile mit elektronischen Bauelementen und integrierten Schaltungen in Miniaturausführung ausgestattet mit Sende- und Empfangsfunktionen, die montiert auf ein oder mehreren Leiterplattenmaterialien und untereinander verbunden mit flexiblen und elektrisch leitfähigem Material zum allgemeinen Einsatz in WPAN (Wireless Personal Area Network) Anwendungen und speziell dabei in Applikationen mit dem Bluetooth Low Energy (BLE) Standard zur vorzugsweisen Verlegung in Gebäuden, Schiffen, Fahrzeugen zur Personenbeförderung für eine drahtgebundene Kommunikation untereinander und zu peripheren Geräten und für eine drahtlose Kommunikation mit mobilen WPAN-Komponenten angebracht an technischen Einrichtungen, Fahrzeugen, Personen, die sich in anwendungsgerechter Reichweite zu diesen mikroelektronischen Bauteilen bewegen.

Für verschiedene Aufgabenstellungen u. a. zur Gebäudeautomation, der Steuerung technischer Anlagen, logistischer Abläufen in der industriellen Fertigung oder Lagerhaltung, zur Identifizierung im Rahmen von Zugangskontrollen und ferner für Navigationsaufgabenstellungen innerhalb von Gebäuden, der Datenübertragung von sich im Raum befindlicher und auch bewegender Fahrzeuge, Anlagenteile bzw. Personen ist eine drahtlose Datenübertragung notwendig. Das wird beim derzeitigen Stand der Technik mittels funktechnischer Komponenten u. a. im Rahmen von WPAN Anwendungen realisiert, wobei die Hardwarekomponenten der Sende- und Empfangskomponenten nach funktechnischen Kriterien vorgegeben, jeweils im Gebäude verteilt werden und so positioniert sind, dass die gewünschte Datenkommunikation zustande kommen kann.

Besonders bei unübersichtlichen, vorwiegend industriell genutzten technischen Anlagen in z.B. großvolumigen technischen Gebäuden mit einer Vielzahl von Geschossen gestaltet sich die Ausführung der WPAN Netzanordnungen aufgrund funktechnisch störender Materialien im Baukörper und der technischen Anlagen vielfach sehr aufwendig.

Ziel der Erfindung ist es ein universell verwendbares Anlagenteil für den Aufbau von WPAN Anwendungen zu beschreiben, das für eine anwendungsgerechte Verlegung im Baukörper bereits in der Rohbauphase von Gebäuden geeignet ist. Damit soll die Möglichkeit bestehen, die später im Gebäude notwendigen drahtlosen Kommunikationsaufgaben schon in der Bauphase durch eine funktionsgerechte Positionierung von Anlagenteilen vorzubereiten.

Bekannt sind schon einige technische Anwendungen bei denen im Baukörper elektronische Bauteile in Form von RFID (Radio-Frequenz-Identifikation) Transpondern an ausgewählten Standorten im Baukörper eingebracht sind, die ausgewählte Daten speichern und mit entsprechenden RFID Lesegeräten drahtlos kommunizieren können. Das Spektrum der Anwendungsformen ist beschrieben in der Veröffentlichung "Anwendbarkeit der RFID-Technologie im Bauwesen", ISBN-10: 978-3-8348-1468.

Nachteile dieser Lösungen sind u. a. die eingeschränkten Möglichkeiten bei der Datenkommunikation und die fehlende Flexibilität bei der Anpassung an die jeweils spezifischen örtlichen Umgebungen und der Anpassung bei veränderten Aufgabenstellungen.

Diese Nachteile sollen mit der in Schutzanspruch 1 formulierten Lösung verbessert werden.

Ausführungsformen der vorliegenden Erfindung werden in exemplarischer Weise mit Bezug auf die angehängten Zeichnungen beschrieben, in denen:
Figur 1, Ein Schema einer im Betonfußboden dauerhaft verlegten kabelförmigen Anordnung (1) und einer sich in der Ebene bewegenden Person mit einer WPAN-Komponente (10)
Figur 2, Ein Schema mit verschiedenen Verlegeformen kabelförmiger Anordnungen (1) unter Einbeziehung von mikroelektronischen Bauteilen mit Kopplerfunktion (6)
Figur 3, Ein Schema wie elektronische Bauteile (2) befestigt auf Leiterplattenmaterial (14) in eine kabelförmige Anordnung (1) mit Hilfe einer schalenförmigen Umhüllung (7) eingefügt werden können
Figur 4, Ein Schema über eine Ausführung für elektronische Bauteile mit Koppleranschlüssen (6)

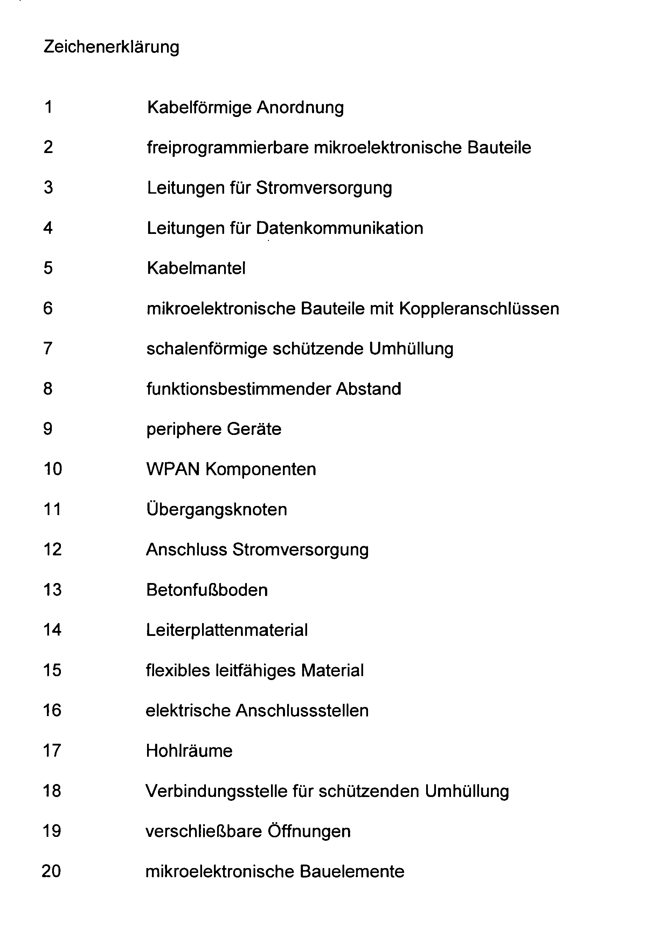

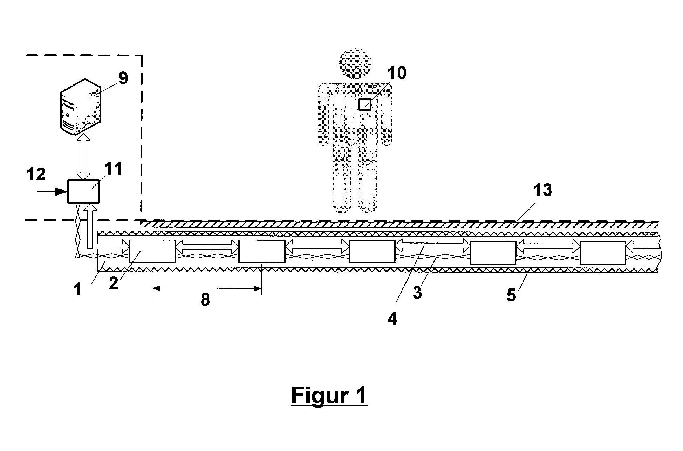

Figur 1 zeigt in beispielhafter Form eine erfindungsgemäße Anwendung der Lösung. Hier ist eine kabelförmige Anordnung (1) mit den freiprogrammierbaren mikroelektronischen Bauteilen (2) im funktionsbestimmenden Abstand (8) im Betonfußboden (13) gemäß Anspruch 1 verlegt. Die Bauteile enthalten Sende- und Empfangskomponenten und kommunizieren drahtlos mit WPAN-Komponenten (10) befestigt an sich in der Ebene bewegenden Personen und drahtgebunden mit peripheren Geräten (9).

Je nach Aufgabenstellung kann die in der kabelförmigen Anordnung (1) vorhandene Anzahl freiprogrammierbarer mikroelektronischer Bauteile (2) für die auszuführenden anwendungsgerechten Funktionen jeweils ausgewählt werden. Alle nicht benötigten Bauteile können deaktiviert werden. Aufgrund der Flexibilität der Anordnung lassen sich die kabelförmigen Anordnungen (1) im gesamten Gebäude angepasst an die auszuführenden Funktionen und die jeweilige Gebäudespezifik verlegen.

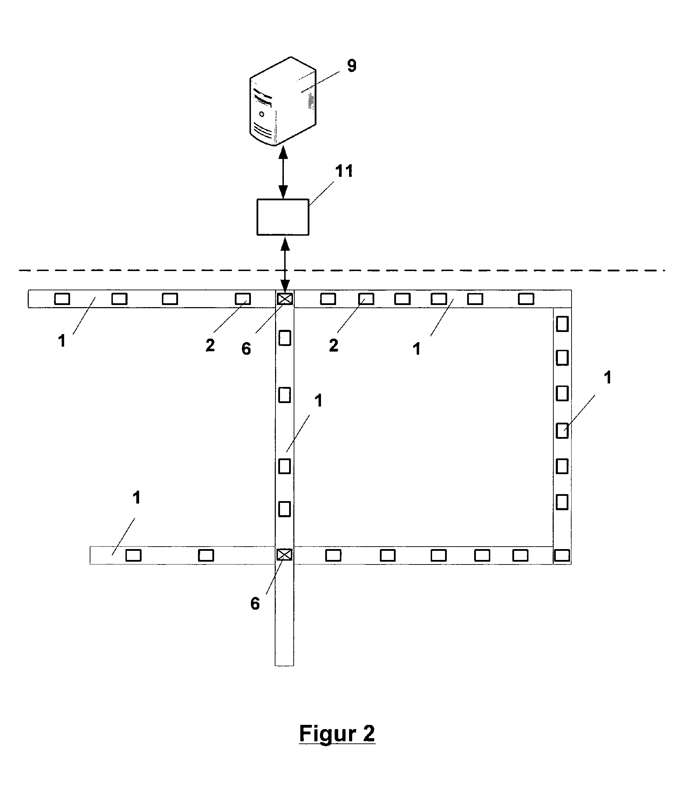

Dabei sind auch die in Figur 2 gezeigten unterschiedlichen Verlegeformen mit Einbeziehung der Kopplerbauteile (6) möglich. Bei großen Gebäudeabmessungen und somit auch großen Verlegelängen der kabelförmige Anordnung (1) werden elektronische Bauteile mit Koppleranschlüssen (6) eingefügt, die mittels Repeaterfunktionen die technischen Anforderungen an den internen Datentransfer zwischen den beteiligten Komponenten sicherstellen.

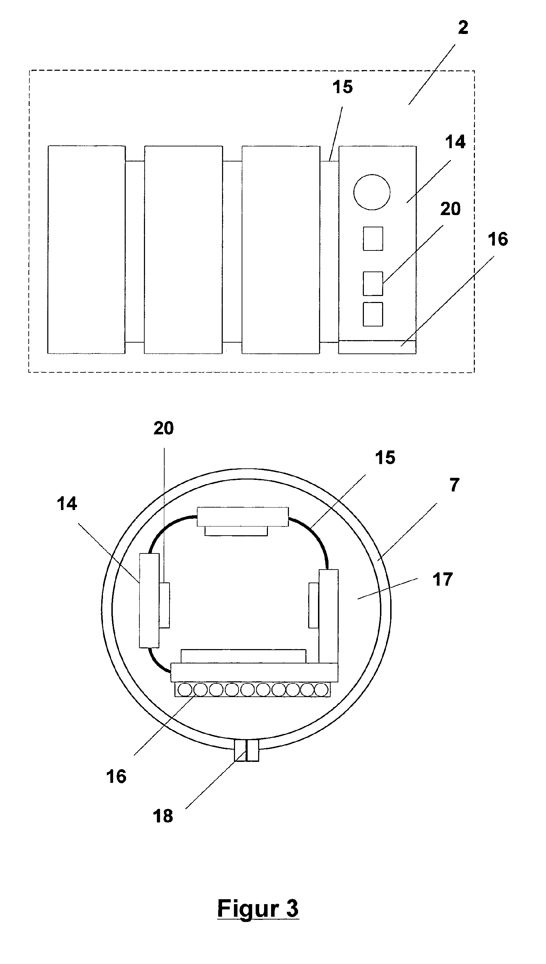

Figur 3 zeigt in einer schnittförmigen Abbildung eine Ausführung wie die mikroelektronischen Bauteile (2) befestigt auf dem Leiterplattenmaterial (14) in eine kabelförmige Anordnung (1) mit Hilfe einer schalenförmigen Umhüllung (7) eingefügt werden können.

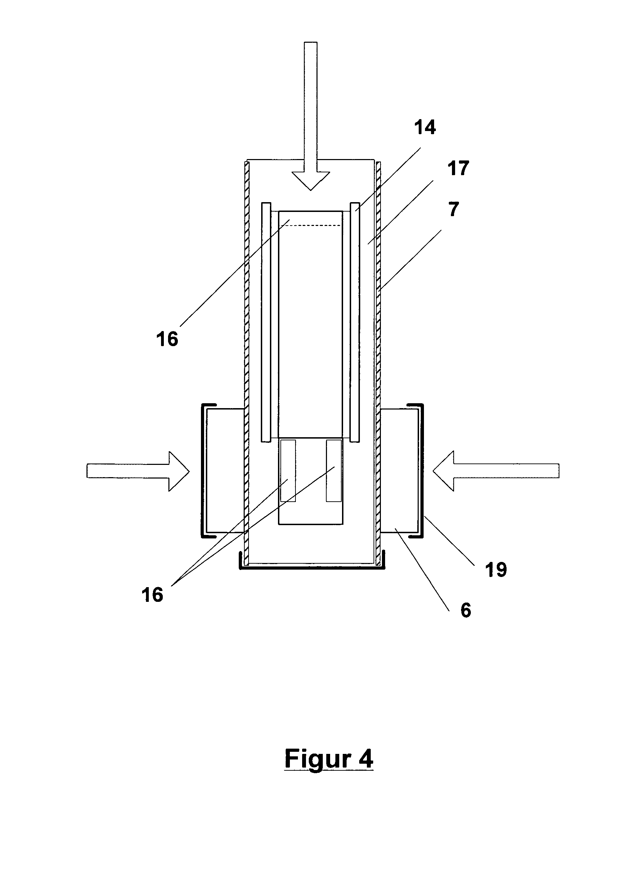

In Figur 4 ist eine Ausführung abgebildet wie sich bei Abzweigungen an elektronischen Bauteilen mit Koppleranschlüssen (6) weitere kabelförmige Anordnungen (1) anschließen lassen.

## Patentansprüche

1. Kabelförmige Anordnung (1) zum vorzugsweisen Einsatz in WPAN (Wireless Personal Area Network) Anwendungen zur Verlegung in Gebäuden, Schiffen, Fahrzeugen zur Personenbeförderung bestehend aus elektrischen Leitungen mit einer Anzahl im Leitungsverlauf integrierter mikroelektronischer und freiprogrammierbarer Bauteile (2) mit elektronischen Bauelementen und integrierten Schaltungen in Miniaturausführung (20) ausgestattet mit Steuerungs-, Sende- und Empfangsfunktionen, die montiert auf ein oder mehreren Leiterplattenmaterialien (14) und untereinander verbunden mit flexiblen und elektrisch leitfähigem Material (15) und mit entsprechenden Anschlussstellen (16) für elektrische Leitungen (3), (4) sind für eine drahtgebundene Kommunikation über Übergangsstellen in Form von Leitungssteckverbindungen (11) mit Anschluss an die Stromversorgung (12) und zu peripheren Geräten (9) und eine drahtlose Kommunikation mit im Gebäude fest montierter oder mobiler WPAN-Komponenten (10) angebracht an technischen Einrichtungen, Fahrzeugen, Personen, die sich in anwendungsgerechter Reichweite zu den mikroelektronischen Bauteilen (2) befinden bzw. bewegen und die kabelförmige Anordnung (1) ferner so gestaltet ist, dass hier eine Anzahl mikroelektronischer Bauteile (2) linienförmig und hintereinander in einem funktionsbestimmten Abstand (8) angeordnet ist und diese mit elektrischen Leitungen, verbunden sind mit deren Hilfe zum einen die Funktion der Stromversorgung (3) und zum anderen die Funktion der Datenkommunikation (4) vorzugsweise mit Ethernetleitungen oder auch spezifischen Leitungsanordnungen der in der elektronischen Steuerungstechnik bekannten Bus-Systeme ausgeführt zwischen den mikroelektronischen Bauteilen (2) untereinander und peripheren Geräten (9) sichergestellt wird, wobei die beiden Funktionen auch über gemeinsam genutzte elektrische Leitungen realisiert werden können und dass die elektrische Verbindung der Leitungen mit den mikroelektronischen Bauteilen (2) mit Hilfe von Anschlussstellen (16) unlösbar bzw. über lösbare Leitungssteckverbindungen ausgeführt werden kann und dass die einzelnen mikroelektronischen Bauteile (2) mit einem geeigneten nichtleitenden Material deren Abmessungen vorzugsweise angepasst an die Konturen von elektrischen Kabeln in Form von schalenförmigen Umhüllungen (7) ausgeführt ist mit einer mechanischen Schutzfunktion für die mikroelektronischen Bauteile (2) und ferner der Sicherstellung des mechanischen Überganges zum Mantel der elektrischen Leitungen (3),(4), die sich an den Anschlussstellen der mikroelektronischen Bauteile (2) befinden so ausgeführt, dass an den Seiten der schalenförmigen Umhüllungen (7) nach deren Montage sich mittels geeigneter Vorrichtungen (18) diese sich mechanisch lösbar befestigen lassen oder in anderer Form dauerhaft verschweißt werden können und die verbleibenden Hohlräume (17) mit geeigneten Stoffen so vergossen werden können, dass die Bauteile damit gegen eine mechanische Beschädigung geschützt sind und dass diese Anordnung dann über die notwendigen mechanischen Eigenschaften wie bei elektrischen Installationskabeln üblich verfügt und sich somit in oder an Bauteilen vorzugsweise in Betonfußböden (13) dauerhaft im Beton oder auch in Schutzrohren, in Doppelböden bzw. anderen Teilen des Baukörpers wie Wänden, Decken oder Tragsäulen, auf Kabeltrassen oder auch separat mit geeigneten Befestigungsteilen für elektrische Kabel innerhalb bzw. auch außerhalb von Gebäuden unterschiedlichster Ausführungen dauerhaft oder auch für flexible Anwendungen in Schutzrohren verlegen lässt und dass innerhalb der kabelförmigen Anordnung (1) mikroelektronische Bauteile mit einer zusätzlichen Kopplerfunktion (6) angeordnet werden können, die zum einen unterschiedliche geometrische Verlegungsformen der kabelförmigen Anordnungen (1) neben den vorzugsweise linienförmigen auch sternförmige, maschenförmige oder auch ringförmige bzw. gemischte Ausführungen ermöglichen und zum anderen über Repeaterfunktionen verfügen können, die sicherstellen, dass auch bei längeren Verlegungsarten der funktionsgerechte Datentransfer zum einen zwischen den mikroelektronischen Bauteilen (2) untereinander und zum anderen zu den peripheren Geräten (9) sichergestellt werden kann und das an diesen mikroelektronischen Bauteilen mit Kopplerfunktion (6) elektrische Anschlussstellen (16) vorhanden sind, so ausgeführt, dass sich an den Umhüllungen (7) eine oder mehrere verschließbare Öffnungen (19) befinden, die bei Bedarf geöffnet werden können und über diese Öffnungen der Zugang zu Kontaktstellen (16) möglich ist in Form unlösbarer bzw. lösbarer Kontaktverbindungen für die dort abzuzweigenden kabelförmigen Anordnungen (1) und dass nach Herstellen der elektrischen Kontaktverbindung zu der dort abzweigenden kabelförmig gestalteten Anordnung (1) weiter eine mechanische Vorrichtung vorhanden ist, die mittels mechanischer Einrastfunktion oder einer anderen Befestigungsart sicherstellt, dass die geschaffene Verbindungsstelle zum einen dauerhaft abgedichtet wird und zum anderen für die elektrische Anschlussstelle (16) eine mechanische Zugentlastung bildet.

2. Kabelförmige Anordnung (1) mit mikroelektronischen Bauteilen (2) nach Anspruch 1, **dadurch gekennzeichnet,**
**dass** die kabelförmige Anordnung (1) auch so ausgeführt werden kann, dass die mikroelektronischen Bauteile (2) direkt in die elektrischen Leitungen der Anordnung so eingefügt werden, dass die elektrischen Leitungen (3), (4) und die mikroelektronischen Bauteile (2) zusammen eine mechanische Einheit bilden und mittels eines Kabelmantel wie bei elektrischen Installationskabeln üblich nach Einfügen und Kontaktierung der mikroelektronischen Bauteile (2) eingehüllt werden können, wobei die elektrischen Anschlussstellen (16) so ausgeführt werden, dass eine dauerhafte Kontaktierung mittels automatengerechter Löt-oder Presstechnik möglich ist und die Trägermaterialien (14) für die mikroelektronischen Bauteile (2) vorzugsweise aus flexiblem Material bestehen, damit sich diese beim Verdrillen der elektrischen Leitungen entsprechend an die dann vorhandene Kontur der elektrischen Leitungen formgerecht anpassen können.

3. Kabelförmige Anordnung (1) mit mikroelektronischen Bauteilen (2) nach Anspruch 1, **dadurch gekennzeichnet,**
**dass** die mikroelektronischen Bauteile (2) in einem festen Rasterabstand zueinander in die kabelförmige Anordnung (1) eingefügt sind wobei der funktionsbestimmende Abstand (8) bestimmt wird durch die technischen Anforderungen der Datenkommunikation zwischen den mikroelektronischen Bauteilen (2) untereinander oder auch in unterschiedlichen Abständen zueinander die der Anwender entsprechend spezifischer Aufgabenstellungen vorgeben kann.

4. Kabelförmige Anordnung (1) mit mikroelektronischen Bauteilen (2) nach Anspruch 1, **dadurch gekennzeichnet,**
**dass** die mikroelektronischen Bauteile (2) mit Sende - und Empfangskomponenten über funktionsgerecht ausgeführte Sende- und Empfangsantennenanordnungen und über fernsteuerbare Baugruppen verfügen zur Veränderung der Sende-und Empfangspegel, um die Anforderungen an die anwendungsgerechte drahtlose Kommunikationsreichweite zu erfüllen und dass die Antennen zum einen direkt auf dem Trägermaterial (14) der mikroelektronischen Bauteile (2) aufgebracht werden oder zum anderen als abgesetzte Antennen außerhalb der mikroelektronischen Bauteile (2) positioniert im Zwischenraum zwischen den Umhüllungen (17) und den Trägermaterialien (14) der mikroelektronischen Bauteile (2) oder auch ausgeführt in Folienform in Form einer Montage auf dem äusseren Kabelmantel der kabelförmigen Anordnung (1).

5. Kabelförmige Anordnung (1) mit mikroelektronischen Bauteilen (2) nach Anspruch 1, **dadurch gekennzeichnet,**
**dass** für kabelförmige Anordnungen (1), die an eine Koppleranschlussstelle (6) angeschlossen werden sollen eine Vorrichtung angebracht wird, die passförmig zu den mechanischen Abmessungen der Koppleranschlussstelle (6) ist und zum einen eine funktionsgerecht abdichtende Eigenschaft besitzt und zum anderen über eine mechanisch befestigende Eigenschaft mittels eines Rast-, Klemm-, Klebe- oder Schraubmechanismus verfügt.

6. Kabelförmige Anordnung (1) mit mikroelektronischen Bauteilen (2) nach Anspruch 1, **dadurch gekennzeichnet,**
**dass** auf der kabelförmigen Umhüllung (7) eine optische Kennzeichnung in Form elektronisch lesbarer Zeichen oder auch anderer Symbole an den Stellen, wo sich im Kabelverlauf mikroelektronische Bauteile (2) befinden, aufgebracht ist als Montagehinweis für die Positionsfestlegung der kabelförmigen Anordnung (1) beim anwendungsgerechten Verlegen bzw. beim Trennen der kabelförmigen Anordnungen (1).

7. Kabelförmige Anordnung (1) mit mikroelektronischen Bauteilen (2) nach Anspruch 1, **dadurch gekennzeichnet,**
**dass** die kabelförmige Anordnung (1) auch so ausgeführt werden kann, dass die mikroelektronischen Bauteile (2) mit den Leiterplattenmaterial (14) jeweils in separaten dauerhaft verschließbaren durch Schweißen oder Kleben bzw. auch verschliessbar mittels Schraubverbindungen oder mechanisch wirkendem Rastmechanismus ausgeführten schalenförmigen Gehäusen unterschiedlicher Abmessungen vorzugsweise in Plastmaterialausführung untergebracht sind und
**dass** in diesen Gehäusen eine Anzahl von Durchbrüchen für Anschlusskabel vorhanden sind in die die kabelförmigen Anordnungen (1) dann mit Kabeldurchführungen, die über entsprechend abdichtende und zugentlastende Eigenschaften verfügen, verlegt werden können.

8. Kabelförmige Anordnung (1) mit mikroelektronischen Bauteilen (2) nach Anspruch 1, **dadurch gekennzeichnet,**
**dass** die kabelförmige Anordnung (1) mit mikroelektronischen Bauteilen (2) auch an band- oder mattenförmigen Unterlagen befestigt werden kann, die aus textilen oder folienförmigen Material hergestellt sind und sich an bzw. innerhalb von Wänden, Decken, Türen, Fenstern, Fußböden, Kleidungsstücken, Fahrzeugen, Möbeln usw. befestigen lassen, so ausgeführt, dass der Anwender bereits in der Planungsphase für eine Aufgabenstellung mit mikroelektronischen Bauteilen (2) die konkrete und anwendungsgerechte Position der mikroelektronischen Bauteile (2) mit Hilfe bekannter AutoCAD-Zeichenprogrammen bei der Produktentwicklung festlegen kann und diese Vorgaben dann bei der Fertigung der band- oder mattenförmigen Unterlagen berücksichtigt werden können.

## Geänderte Patentansprüche

### Geänderte Patentansprüche gemäss Regel 137(2) EPÜ.

**1.** Kabelförmige Anordnung (1) zum Einsatz in WPAN (Wireless Personal Area Network) Anwendungen zur Verlegung in Gebäuden, Schiffen, Fahrzeugen zur Personenbeförderung bestehend aus elektrischen Leitungen mit einer Anzahl im Leitungsverlauf integrierter mikroelektronischer und freiprogrammierbarer Bauteile (2) mit elektronischen Bauelementen und integrierten Schaltungen in Miniaturausführung (20) ausgestattet mit Steuerungs-, Sende- und Empfangsfunktionen, die montiert auf ein oder mehreren Leiterplattenmaterialien (14) und untereinander verbunden mit flexiblen und elektrisch leitfähigem Material (15) und mit entsprechenden Anschlussstellen (16) für elektrische Leitungen (3), (4) sind für eine drahtgebundene Kommunikation über Übergangsstellen in Form von Leitungssteckverbindungen (11) mit Anschluss an die Stromversorgung (12) und zu peripheren Geräten (9) und eine drahtlose Kommunikation mit im Gebäude fest montierter oder mobiler WPAN-Komponenten (10) angebracht an technischen Einrichtungen, Fahrzeugen, Personen, die sich in anwendungsgerechter Reichweite zu den mikroelektronischen Bauteilen (2) befinden oder bewegen und die kabelförmige Anordnung (1) ferner so gestaltet ist, dass hier eine Anzahl mikroelektronischer Bauteile (2) linienförmig und hintereinander in einem funktionsbestimmten Abstand (8) angeordnet ist und diese mit elektrischen Leitungen, verbunden sind mit deren Hilfe zum einen die Funktion der Stromversorgung (3) und zum anderen die Funktion der Datenkommunikation (4) vorzugsweise mit Ethernetleitungen oder auch spezifischen Leitungsanordnungen der in der elektronischen Steuerungstechnik bekannten Bus-Systeme ausgeführt zwischen den mikroelektronischen Bauteilen (2) untereinander und peripheren Geräten (9) sichergestellt wird, wobei die beiden Funktionen auch über gemeinsam genutzte elektrische Leitungen realisiert werden können und dass die elektrische Verbindung der Leitungen mit den mikroelektronischen Bauteilen (2) mit Hilfe von Anschlussstellen (16) über eine feste Verdrahtung oder über Leitungssteckverbindungen ausgeführt werden kann und dass die einzelnen mikroelektronischen Bauteile (2) mit einem geeigneten nichtleitenden Material deren Abmessungen angepasst an die Konturen von elektrischen Kabeln in Form von schalenförmigen Umhüllungen (7) ausgeführt ist mit einer mechanischen Schutzfunktion für die mikroelektronischen Bauteile (2) und ferner der Sicherstellung des mechanischen Überganges zum Mantel der elektrischen Leitungen (3),(4), die sich an den Anschlussstellen der mikroelektronischen Bauteile (2) befinden wobei an den Seiten der schalenförmigen Umhüllungen (7) nach deren Montage sich diese mechanisch lösbar befestigen lassen oder in anderer Form dauerhaft verschweißt werden können und die verbleibenden Hohlräume (17) mit geeigneten Stoffen so vergossen werden können, dass die Bauteile damit gegen eine mechanische Beschädigung geschützt sind und dass diese Anordnung sich dann in oder an Bauteilen, in Betonfußböden (13), dauerhaft im Rohbeton oder auch in Schutzrohren, in Doppelböden oder anderen Teilen des Baukörpers wie Wänden, Decken oder Tragsäulen, auf Kabeltrassen oder auch separat mit geeigneten Befestigungsteilen für elektrische Kabel innerhalb bzw. auch außerhalb von Gebäuden unterschiedlichster Ausführungen dauerhaft oder auch für flexible Anwendungen in Schutzrohren verlegen lässt und dass innerhalb der kabelförmigen Anordnung (1) mikroelektronische Bauteile mit einer zusätzlichen Kopplerfunktion (6) angeordnet werden können, die zum einen unterschiedliche geometrische Verlegungsformen der kabelförmigen Anordnungen (1) neben den vorzugsweise linienförmigen auch sternförmige, maschenförmige oder auch ringförmige bzw. gemischte Ausführungen ermöglichen und zum anderen über eine Repeaterfunktion enthält, die sicherstellt, dass auch bei längeren Verlegungsarten der funktionsgerechte Datentransfer zum einen zwischen den mikroelektronischen Bauteilen (2) untereinander und zum anderen zu den peripheren Geräten (9) sichergestellt werden kann und das an diesen mikroelektronischen Bauteilen mit Kopplerfunktion (6) elektrische Anschlussstellen (16) vorhanden sind, wobei sich an den Umhüllungen (7) eine oder mehrere verschließbare Öffnungen (19) befinden, die bei Bedarf geöffnet werden und über diese Öffnungen der Zugang zu Kontaktstellen (16) möglich ist in Form einer festen Verdrahtung oder über Leitungssteckverbindungen für die dort abzuzweigenden kabelförmigen Anordnungen (1).

**2.** Kabelförmige Anordnung (1) mit mikroelektronischen Bauteilen (2) nach Anspruch 1, **dadurch gekennzeichnet,**
**dass** bei der kabelförmigen Anordnung (1) die mikroelektronischen Bauteile (2) direkt in die elektrischen Leitungen der Anordnung so eingefügt werden, dass die elektrischen Leitungen (3), (4) und die mikroelektronischen Bauteile (2) zusammen eine mechanische Einheit bilden und mittels eines Kabelmantel nach Einfügen und Kontaktierung der mikroelektronischen Bauteile (2) eingehüllt werden können, wobei die Kontaktierung der elektrischen Anschlussstellen (16) mittels automatengerechter Löt- oder Presstechnik erfolgt und die Trägermaterialien (14) für die mikroelektronischen Bauteile (2) aus flexiblem Material bestehen, damit sich diese beim Verdrillen der elektrischen Leitungen entsprechend an die dann vorhandene Kontur der elektrischen Leitungen formgerecht anpassen können.

**3.** Kabelförmige Anordnung (1) mit mikroelektronischen Bauteilen (2) nach Anspruch 1, **dadurch gekennzeichnet,**
**dass** die mikroelektronischen Bauteile (2) in einem jeweils anwendungsgerechten Abstand zueinander in die kabelförmige Anordnung (1) eingefügt sind wobei der funktionsbestimmende Abstand (8) bestimmt wird durch die technischen Anforderungen der Datenkommunikation zwischen den mikroelektronischen Bauteilen (2) untereinander.

**4.** Kabelförmige Anordnung (1) mit mikroelektronischen Bauteilen (2) nach Anspruch 1, **dadurch gekennzeichnet,**
**dass** die mikroelektronischen Bauteile (2) mit Sende - und Empfangskomponenten über funktionsgerecht ausgeführte Sende- und Empfangsantennenanordnungen und über fernsteuerbare Baugruppen verfügen zur Veränderung der Sende- und Empfangspegel, um die Anforderungen an die anwendungsgerechte drahtlose Kommunikationsreichweite zu erfüllen und dass die Antennen zum einen direkt auf dem Trägermaterial (14) der mikroelektronischen Bauteile (2) aufgebracht werden oder zum anderen als abgesetzte Antennen außerhalb der mikroelektronischen Bauteile (2) positioniert im Zwischenraum zwischen den Umhüllungen (17) und den Trägermaterialien (14) der mikroelektronischen Bauteile (2) oder auch ausgeführt in Folienform in Form einer Montage auf dem äusseren Kabelmantel der kabelförmigen Anordnung (1).

**5.** Kabelförmige Anordnung (1) mit mikroelektronischen Bauteilen (2) nach An spruch 1, **dadurch gekennzeichnet,**
**dass** für kabelförmige Anordnungen (1), die an eine Koppleranschlussstelle (6) angeschlossen werden sollen eine Vorrichtung angebracht wird, die passförmig zu den mechanischen Abmessungen der Koppleranschlussstelle (6) ist und zum einen eine funktionsgerecht abdichtende Eigenschaft besitzt und zum anderen über eine mechanisch befestigende Eigenschaft mittels eines Rast-, Klemm-, Klebe- oder Schraubmechanismus verfügt.

**6.** Kabelförmige Anordnung (1) mit mikroelektronischen Bauteilen (2) nach An spruch 1, **dadurch gekennzeichnet,**
**dass** auf der kabelförmigen Umhüllung (7) eine optische Kennzeichnung in Form elektronisch lesbarer Zeichen oder auch anderer Symbole an den Stellen, wo sich im Kabelverlauf mikroelektronische Bauteile (2) befinden, aufgebracht ist als Montagehinweis für die Positionsfestlegung der kabelförmigen Anordnung (1) beim anwendungsgerechten Verlegen bzw. beim Trennen der kabelförmigen Anordnungen (1).

**7.** Kabelförmige Anordnung (1) mit mikroelektronischen Bauteilen (2) nach Anspruch 1, **dadurch gekennzeichnet,**
**dass** die kabelförmige Anordnung (1) die mikroelektronischen Bauteile (2) mit den Leiterplattenmaterial (14) jeweils in separaten dauerhaft verschließbaren durch Schweißen oder Kleben oder verschliessbar mittels Schraubverbindungen oder mechanisch wirkendem Rastmechanismus ausgeführten schalenförmigen Gehäusen unterschiedlicher Abmessungen vorzugsweise in Plastmaterialausführung untergebracht sind und dass in diesen Gehäusen eine Anzahl von Durchbrüche für Anschlusskabel vorhanden sind in die die kabelförmigen Anordnungen (1) verlegt werden können.

**8.** Kabelförmige Anordnung (1) mit mikroelektronischen Bauteilen (2) nach Anspruch 1, **dadurch gekennzeichnet,**
**dass** die kabelförmige Anordnung (1) mit mikroelektronischen Bauteilen (2) auch an band- oder mattenförmigen Unterlagen befestigt werden kann, die aus textilen oder folienförmigen Material hergestellt sind und sich an bzw. innerhalb von Wänden, Decken, Türen, Fenstern, Fußböden, Kleidungsstücken, Fahrzeugen, Möbeln befestigen lassen.
